# EUROPEAN PATENT SPECIFICATION

(11) **EP 1 468 217 B1**
(45) Date of publication and mention of the grant of the patent: **11.04.2007**
(21) Application number: 03701191.3
(22) Date of filing: 10.01.2003
(51) Int. Cl.: F16L 5/08

(54) **FRAME FOR CABLE ENTRY OF THE LIKE, SAID FRAME INCLUDING A BREAKABLE PROTECTION**
RAHMEN ZUM KABELEINTRITT ODER DERGLEICHEN, DER RAHMEN MIT EINEM ZERBRECHBAREN SCHUTZ
CHASSIS POUR ENTREE DE CABLE OU ANALOGUE, LEDIT CHASSIS COMPORTANT UNE PROTECTION CASSABLE

(30) Priority: 22.01.2002 SE 0200158
(43) Date of publication of application: 20.10.2004
(73) Proprietor: Roxtec AB, 371 23 Karlskrona (SE)
(72) Inventor: KREUTZ, Tomas, S-371 60 Lyckeby (SE)
(74) Representative: Petri, Stellan
(86) International application number: PCT/SE2003/000023
(87) International publication number: WO 2003/062689

(56) References cited:
- EP-A1- 0 898 106
- EP-A1- 1 164 677
- WO-A1-01/28057
- DE-A1- 19 724 136
- DE-C- 958 671

## Description

### Technical Field

The present invention concerns a frame for a cable entry, pipe penetration or the like.

### Prior Art

Different frames of this kind are widely used today. The frames are parts of systems used to seal at a cable entry, pipe penetration etc. In addition to the frame the systems normally comprises further elements or modules to be placed tightly surrounding the cables etc. Systems of this kind are used in many different environments, such as for cabinets, technical shelters, junction boxes and machines. They are used in different industrial environments, such as automotive, telecom, power generation and distribution, as well as marine and offshore.

The seals may have to seal against fluid, gas, fire, rodents, termites, dust, moisture etc. The seal may receive cables for electricity, communication, computers etc. or pipes for different gases or liquids such as water, compressed air, hydraulic fluid and cooking gas.

Normally the frame of the present invention is mounted beforehand and the further parts including the cables, pipes or the like are mounted from one side. As the frames often are open before the cables or the like are mounted, there is always a risk that by mistake parts will fall through the opening of the frame. This is especially the case if the frame is to be mounted in a horizontal position. Furthermore, if the frame is placed at a relatively large height it may be hazardous for any person present in the space under the frame. Parts that may fall through the opening are tools, screws or other fastening means, parts of the cable entry etc. It may also be a problem how one is to retrieve essential parts that has fallen through the opening.

### Summary of the Invention

One object of the present invention is to hinder that parts mistakenly fall through the opening of the frame.

The above object is met by a frame for a seal for a cable entry, pipe penetration or the like comprising at least one compression unit. The compression unit comprises an elastic body. Furthermore, the frame has an opening for receiving the cable, pipe or the like with or without a further sealing part surrounding the cable, pipe or the like. A breakable protection is arranged in connection to the opening of the frame to close off said opening.

Another object of the present invention is that the protection should be possible to manufacture and fix to the frame in a simple fashion at a relatively low cost. The protection should be strong enough to catch falling objects, but at the same time break when exerted to a force of predetermined strength.

Further objects and advantages of the present invention will be obvious for a person skilled in the art, when reading the detailed description below of preferred embodiments.

### Brief Description of the Drawings

The invention will be described more closely below by way of an example and with reference to the enclosed drawings. In the drawings:
Fig. 1 is a perspective, exploded view of a frame according to the present invention,
Fig. 2 is a perspective, exploded view of the frame of Fig. 1 taken from the opposite direction,
Fig. 3 is a plan view of a further frame according to the present invention, and
Fig. 4 is a principal drawing of a protection according to a further embodiment of the present invention.

### Detailed Description of Preferred Embodiments

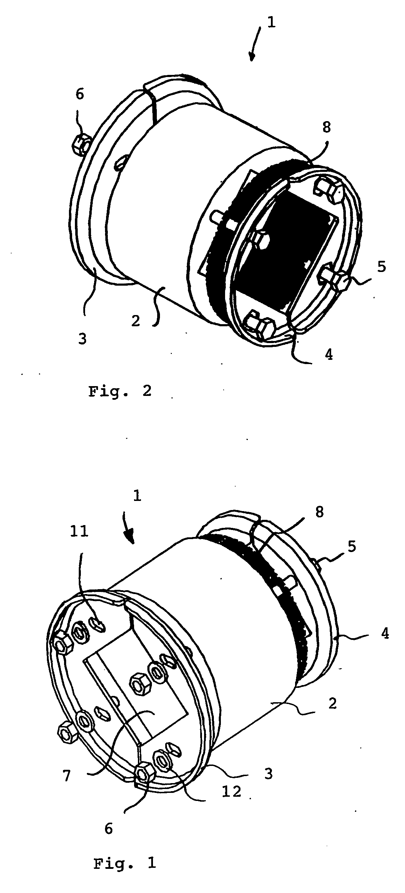

The frame 1 shown in the example of Figs. 1 and 2 is to be placed in a circular opening of any kind of wall, floor, roof, top or bottom. The frame 1 is formed of an elastic body 2 having a cylindrical form and a central square opening 7. At each end of the elastic body 2, fittings 3, 4 are arranged.

In the shown embodiment there are two front fittings 3 and two rear fittings 4. Each single fitting 3, 4 has the general form of a L, having two straight inner parts being at right angle to each other. The straight inner parts are to match two sides of the opening 7 of the elastic body 2. Furthermore, each fitting 3, 4 has an outer arc going from the area of the outer end of one straight part to the outer end of the other straight part. The ends of the arc are arranged at a distance from the ends of the straight parts. For the front fitting 3 the radius of the arc is somewhat bigger than the outer radius of the elastic body 2 and for the rear fitting 4 the radius of the arc is somewhat smaller than the outer radius of the elastic body 2. After assembly the L-formed fittings 3, 4 at each end are arranged with a small gap between each other and surrounding the central opening 7.

A person skilled in the art realises that the fittings 3, 4 may have other forms and number. In one alternative embodiment there are four fittings at each end, where each fitting has a generally straight extension with a curved side adapted to the form of the elastic body 2.

Normally the fittings 3, 4 extend a short distance inwardly over the central opening 7. In this way any inserts received in the opening will be supported in the axial direction. In the shown embodiment the fittings 3, 4 are bent at the outer periphery. This is often done to increase the flexural rigidity.

The front fittings 3 and the rear fittings 4 are mounted to the elastic body 2 by means of screws 5 received in through openings of the elastic body 2, which screws 5 are to co-operate with nuts 6. Normally a washer 12 is placed between each nut 6 and the fitting 3. In the shown embodiment there are four fastening means in form of screws 5 and nuts 6. A person skilled in the art realises that other numbers of fastening means may be used as well as any suitable fastening means in stead of screw and nut. In the front fittings 3, the openings 11 for receiving the fastening means have the form of slots. Thus, the fittings 3 are possible to move a short distance as soon as the fastening means 5, 6 are loosened. This makes it possible to insert sealing units or the like, without the need to totally remove the fittings 3.

The elastic body 2 of the frame 1 forms a compression unit, which is compressed by means of the fittings 3, 4, screws 5 and nuts 6.

According to the invention a breakable protection is arranged closing off the square opening 7. Normally, the protection is arranged at the back end but a person skilled in the art realises that the protection may be placed in any position along the central opening 7. In the embodiment of Figs. 1 and 2 the protection is a net 8, which may be made of a plastic, rubber or metallic material. The net 8 is extended to cover the central opening 7 and it is fixed in the frame 1 by means of the fastening means 5, 6. In the shown embodiment the net 8 is fixed to the frame in that the screws 5 are received in openings of the net 8. In other embodiments the net 8 is moulded into the elastic body 2 by being placed in the mould in a position corresponding to the back end of the frame 1 at the manufacture of the elastic body 2.

In further embodiments the protection is closed (see Fig. 4) or has one or more openings in any pattern. The protection may be made of the same material as the elastic body 2 or made of any other suitable plastic, rubber or metallic material. The closed protection 9 may have indications of fracture 10 to facilitate rupture, as indicated in Fig. 4. The protection should be strong enough to hinder that objects mistakenly fall through the opening 7. However, the protection should be fairly easy to break by pressing a tool, such as a screw driver, against the protection.

As an alternative the protection may be fixed to the frame in a breakable fashion.

In the square central opening 7 of the elastic body 2 a sealing unit (not shown) is normally received, which sealing unit is to receive one or more cables, pipes or the like. The sealing unit has the form of an elastic part, which is pressed against the cables or the like by means of the compression unit formed in the frame 1.

When the cable(s), pipe(s) or the like have been received in the sealing unit placed in the central opening 7 the fastening means are tightened in that the nuts 6 are rotated. As indicated above for insertion of the sealing units or the like the front fittings 3 may be pushed slightly to a side, by the function of the holes 11 formed as slots receiving the screws 5. By the tightening of the fastening means the elastic body 2 will be compressed in the axial direction, which means that it will expand in the radial direction. The expansion in radial direction will tighten the seal around the cable(s), pipe(s) or the like. Thus, the elastic body 2 could be said to form a compression unit, in the sense that the function of the elastic body is to compress the sealing.

The central opening 7 of the frame 1 may receive single pipes, cables etc. without any further sealing parts. If e.g. the central opening is circular it may be used for receiving just one cable or pipe.

In function the frame 1 is normally attached to a wall, floor, roof, top or bottom of a house, a cabinet, a ship etc. In the embodiment of Figs. 1 and 2 the attachment is normally accomplished only by the radial expansion of the elastic body 2, when it is compressed axially by the fastening means 5, 6.

A person skilled in the art realises that the frame may have many different general forms, such as rectangular, square, oval, polygonal etc. Furthermore, the central opening may have other forms such as circular, rectangular, oval, polygonal.

In use the frame 1 is normally first placed in a suitably prepared opening. As stated above it is often only possible to work from one side of the frame 1. The frame 1 is placed in the opening with the front fittings 3 resting against the material surrounding the opening. The frame 1 is usually fixed to the wall or the like in which it is placed. The frame 1 may e.g. be placed in a container at assembly before the container is shipped to its final destination. Eventually the cables or the like normally are placed in a sealing unit having elastic bodies. Before the sealing units containing the cables or the like are received in the frame the net 8, closed protection 9 or any other protection is broken by means of a suitable tool being pressed against the protection. Finally, the compression unit in form of the elastic body 2 is activated in that the fastening means in form of screws 5 and nuts 6 are tightened to give a tight seal.

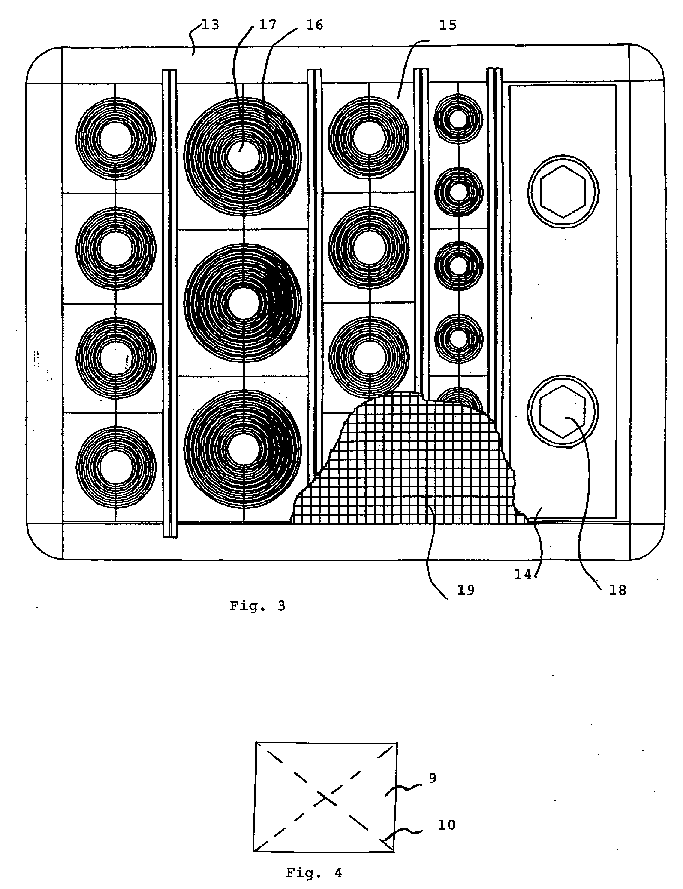

In the embodiment of Fig. 3 a further example of a frame 13 having a protection according to the present invention is shown. The frame 13 is a rigid outer frame forming a central rectangular opening. In the opening several rows of modules or sealing units 15 for receiving cables, pipe or the like are received. At one end of the opening of the frame 13 a compression unit 14 is received. The compression unit 14 is sometimes referred to as a wedge.

In the shown example the modules or sealing units 15 are formed of two halves between which a number of peeling sheets 16 and a centre part 17 are received. When a cable or pipe is to be received in a module 15 the centre part 17 and an appropriate number of peeling sheets 16 are removed. The number of peeling sheets 16 removed is related to the diameter of the cable pipe or the like to be received. A person skilled in the art realises that any number of modules 15 in any number of rows may be received inside the frame 13. However, as the modules 15 as such form no part of the present invention they will not be discussed further here.

The compression unit 14 is of an elastic material and receives compression screws 18. When the compression screws 18 are tightened the elastic material of the compression unit 14 will be compressed in the axial direction of the compression screws 18. The compression in the axial direction of the screws 18 leads to an expansion in other directions. However, as the compression unit 14 is restricted on three sides by the rigid frame 13 the expansion will be mainly in the direction towards the rows of modules 15 in the frame 13. The modules 15 are also made of an elastic material and will be pressed against any cable, pipe or the like received in the module 15. Thus, the modules 15 form sealing units in that they will seal against cables, pipes or the like received in the centre of the modules 15.

The frame 13 of Fig. 3 is furnished with a protection in form of a net 19. As stated above in connection with the embodiment of Figs. 1 and 2 the net 19 may be replaced with other types of protections, being closed or having one or more openings. The protection may be made of a plastic, rubber or metallic material.

When a cable, pipe or the like is to be received in the frame 13, the compression screws 18 are loosened in order to be able to take out one module 15. Thereafter an opening is made in the net 19 and the cable, pipe or the like is pushed through said opening. The module 15 is then fitted around the cable, pipe or the like, in that the centre part 17 and an appropriate number of peeling sheets 16 are removed. Finally the compression screws 18 are tightened to seal around the cables, pipes or the like received in the frame 13.

## Claims

1. A frame (1, 13) for a cable entry, pipe penetration or the like comprising at least one compression unit comprising an elastic body (2, 14), whereby the frame includes an opening (7) for receiving one or more cables, pipes or the like with sealing units surrounding the cables, pipes or the like **characterized in that** a protection (8, 9, 19) separate from the sealing unit is arranged in connection to the opening (7) of the frame (1), to close off said opening (7) and which protection (8, 9, 19) is to be broken before the one or more cables, pipes or the like are received in the opening (7).

2. A frame (1, 13) for a cable entry, pipe penetration or the like comprising at least one compression unit comprising an elastic body (2, 14), whereby the frame includes an opening (7) receiving one or more cables, pipes or the like with or without sealing units surrounding the cables, pipes or the like **characterized in that** a protection (8, 9, 19) is arranged in connection to the opening (7) of the frame (1), to close off said opening (7) and which protection (8, 9, 19) is to be broken before the one or more cables, pipes or the like are received in the opening (7).

3. The frame of claim 1 or 2, **characterized in that** the protection is a net (8).

4. The frame of claim 1 or 2, **characterized in that** the protection (9) is closed and/or that the protection has indications of fracture (10).

5. The frame of any of the previous claims, **characterized in that** the protection is fixed to the frame (1) by means of fastening means.

6. The frame of claim 5, **characterized in that** the protection is fixed to the frame (1) in a breakable fashion.

7. The frame of any of the previous claims, **characterized in that** the protection is an integrated part of the frame (1,13).

8. The frame of any of the previous claims, **characterized in that** the protection is made of plastic, rubber, metal and/or the like.

9. The frame of any of the previous claims, **characterized in that** said opening (7) is arranged in the centre of the elastic body (2) and/or that the opening (7) is square in cross section.

10. The frame of any of the previous claims, **characterized in that** the elastic body (2) has a cylindrical outer form; that end plates (3, 4) are arranged at each end of the elastic body (2); that the end plates (3, 4) are fixed to each other by means of fastening means going through the elastic body (2); that the fastening means fixating the end plates (3, 4) to each other are screws (5) and nuts (6); and that each end plate (3, 4) comprises at least two equal parts.

11. The frame of any of the claims 1 to 8, **characterized in that** the frame has a central rectangular opening adapted to receive a compression unit (14) and one or more sealing units (15) for receiving the one or more cables, pipes or the like.

12. A method of mounting one or more cables, pipes or the like in a frame according to any of the previous claims, **characterized in that** with the frame mounted the protection is first broken, then the one or more cables, pipes or the like are pushed through the broken protection with our without sealing units surrounding the one or more cables, pipes or the like, where after the at least one compression unit is activated.

## Patentansprüche

1. Ein Rahmen (1, 13) für einen Kabeleintritt, eine Rohrdurchführung oder dergleichen, der wenigstens eine Druckeinheit mit einem elastischen Körper (2, 14) aufweist, wobei der Rahmen eine Öffnung (7) für die Aufnahme eines oder mehrerer Kabel, Rohre oder dergleichen aufweist, mit Dichtungseinheiten, die die Kabel, Rohre oder dergleichen umgeben, **dadurch gekennzeichnet, daß** ein Schutz (8, 9, 19) getrennt von der Dichtungseinheit in Verbindung mit der Öffnung (7) des Rahmens (1) angeordnet ist, um die besagte Öffnung (7) abzudecken, und daß der Schutz (8, 9, 19) zerbrochen werden muß, bevor das eine oder die mehreren Kabel, Rohre oder dergleichen in die Öffnung (7) eingeführt werden können.

2. Ein Rahmen (1, 13) für einen Kabeleintritt, eine Rohrdurchführung oder dergleichen, der wenigstens eine Druckeinheit mit einem elastischen Körper (2, 14) aufweist, wobei der Rahmen eine Öffnung (7) für die Aufnahme eines oder mehrerer Kabel, Rohre oder dergleichen aufweist, mit oder ohne Dichtungseinheiten, die die Kabel, Rohre oder dergleichen umgeben, **dadurch gekennzeichnet, daß** ein Schutz (8, 9, 19) getrennt von der Dichtungseinheit in Verbindung mit der Öffnung (7) des Rahmens (1) angeordnet ist, um die besagte Öffnung (7) abzudecken, und daß der Schutz (8, 9, 19) zerbrochen werden muß, bevor das eine oder die mehreren Kabel, Rohre oder dergleichen in die Öffnung (7) eingeführt werden können.

3. Der Rahmen gemäß Anspruch 1 oder 2, **dadurch gekennzeichnet, daß** der Schutz ein Netz (8) ist.

4. Der Rahmen gemäß Anspruch 1 oder 2, **dadurch gekennzeichnet, daß** der Schutz (9) geschlossen ist und/oder daß der Schutz Sollbruchstellen (10) aufweist.

5. Der Rahmen gemäß einem der vorhergehenden Ansprüche, **dadurch gekennzeichnet, daß** der Schutz am Rahmen (1) mittels Befestigungsmitteln befestigt ist.

6. Der Rahmen gemäß Anspruch 5, **dadurch gekennzeichnet, daß** der Schutz am Rahmen (1) abbrechbar befestigt ist.

7. Der Rahmen gemäß einem der vorhergehenden Ansprüche, **dadurch gekennzeichnet, daß** der Schutz ein integraler Teil des Rahmens (1, 13) ist.

8. Der Rahmen gemäß einem der vorhergehenden Ansprüche, **dadurch gekennzeichnet, daß** der Schutz aus Kunststoff, Gummi, Metall und/oder dergleichen besteht.

9. Der Rahmen gemäß einem der vorhergehenden Ansprüche, **dadurch gekennzeichnet, daß** die besagte Öffnung (7) in der Mitte des elastischen Körpers (2) angeordnet ist und/oder daß die Öffnung (7) einen quadratischen Querschnitt aufweist.

10. Der Rahmen gemäß einem der vorhergehenden Ansprüche, **dadurch gekennzeichnet, daß** der elastische Körper (2) eine zylinderförmige äußere Form aufweist; daß an jedem Ende des elastischen Körpers (2) Endplatten (3, 4) angeordnet sind; daß die Endplatten (3, 4) miteinander über Befestigungsmittel verbunden sind, die sich durch den elastischen Körper (2) erstrecken; daß die Befestigungsmittel, die die Endplatten (3, 4) miteinander verbinden, Schrauben (5) und Muttern (6) sind; und daß jede Endplatte (3, 4) wenigstens zwei gleiche Teile aufweist.

11. Der Rahmen gemäß einem der Ansprüche 1 bis 8, **dadurch gekennzeichnet, daß** der Rahmen eine zentrale rechteckige Öffnung aufweist, die derart ausgebildet ist, daß sie eine Druckeinheit (14) und eine oder mehrere Dichtungseinheiten (15) für die Aufnahme des einen oder mehrerer Kabel, Rohre oder dergleichen aufnehmen kann.

12. Ein Verfahren zum Befestigen eines oder mehrerer Kabel, Rohre oder dergleichen in einen Rahmen gemäß einem der vorhergehenden Ansprüche, **dadurch gekennzeichnet, daß** bei der Anbringung des Rahmens zunächst der Schutz zerbrochen wird, dann das eine oder die mehreren Kabel, Rohre oder dergleichen mit oder ohne Dichtungseinheiten, die das eine oder die mehreren Kabel, Rohre oder dergleichen umgeben, durch den defekten Schutz gedrückt wird bzw. werden und daß danach die wenigstens eine Druckeinheit aktiviert wird.

## Revendications

1. Châssis (1, 13) pour entrée de câble, pénétration de conduite ou analogue comprenant au moins une unité de compression comprenant un corps élastique (2, 14), moyennant quoi le châssis comporte une ouverture (7) pour recevoir un ou plusieurs câbles, conduites ou analogues avec des unités d'étanchéité entourant les câbles, conduites ou analogues **caractérisé en ce qu'**une protection (8, 9, 19) distincte de l'unité d'étanchéité est connectée avec l'ouverture (7) du châssis (1), pour condamner ladite ouverture (7) et **en ce que** cette protection (8, 9, 19) doit être cassée avant qu'un ou que plusieurs câbles, conduites ou analogues soient reçus dans l'ouverture (7).

2. Châssis (1, 13) pour entrée de câble, pénétration de conduite ou analogue comprenant au moins une unité de compression comprenant un corps élastique (2, 14), moyennant quoi le châssis comporte une ouverture (7) recevant un ou plusieurs câbles, conduites ou analogues avec ou sans unités d'étanchéité entourant les câbles, conduites ou analogues **caractérisé en ce qu'**une protection (8, 9, 19) est connectée avec l'ouverture (7) du châssis (1), pour condamner ladite ouverture (7) et cette protection (8, 9, 19) doit être cassée avant qu'un ou que plusieurs câbles, conduites ou analogues soient reçus dans l'ouverture (7).

3. Châssis selon la revendication 1 ou 2, **caractérisé en ce que** la protection est un filet (8).

4. Châssis selon la revendication 1 ou 2, **caractérisé en ce que** la protection (9) est fermée et/ou la protection présente des signes de fracture (10) .

5. Châssis selon l'une quelconque des revendications précédentes, **caractérisé en ce que** la protection est fixée au châssis (1) au moyen d'un moyen de fixation.

6. Châssis selon la revendication 5, **caractérisé en ce que** la protection est fixée sur le châssis (1) de manière à être cassée.

7. Châssis selon l'une quelconque des revendications précédentes, **caractérisé en ce que** la protection fait partie intégrante du châssis (1, 13).

8. Châssis selon l'une quelconque des revendications précédentes, **caractérisé en ce que** la protection est composée de plastique, de caoutchouc, de métal et/ou analogue.

9. Châssis selon l'une quelconque des revendications précédentes, **caractérisé en ce que** ladite ouverture (7) est disposée au centre du corps élastique (2) et/ou que l'ouverture (7) est de forme carrée en coupe transversale.

10. Châssis selon l'une quelconque des revendications précédentes, **caractérisé en ce que** le corps élastique (2) a une forme externe cylindrique ; que les plaques de fond (3, 4) sont disposées à chaque extrémité du corps élastique (2) ; que les plaques de fond (3, 4) sont fixées l'une à l'autre par un moyen de fixation traversant le corps élastique (2); que le moyen de fixation fixant les plaques de fond (3, 4) l'une à l'autre est composé de vis (5) et d'écrous (6); et que chaque plaque de fond (3, 4) comporte au moins deux parties égales.

11. Châssis selon l'une quelconque des revendications 1 à 8, **caractérisé en ce que** le châssis a une ouverture rectangulaire centrale adaptée pour recevoir une unité de compression (14) et une ou plusieurs unités d'étanchéité (15) pour recevoir un ou plusieurs câbles, conduites ou analogues.

12. Méthode de montage d'un ou plusieurs câbles, conduites ou analogues sur un châssis selon l'une quelconque des revendications précédentes, **caractérisée en ce que**, avec le châssis monté, la protection est d'abord cassée, un ou plusieurs câbles, conduites ou analogues sont ensuite poussés à travers la protection cassée avec ou sans unités d'étanchéité entourant un ou plusieurs câbles, conduites ou analogues, et enfin au moins une unité de compression est activée.
